# EUROPEAN PATENT SPECIFICATION

(11) **EP 4 368 858 B1**
(45) Date of publication and mention of the grant of the patent: **25.03.2026**
(21) Application number: 23201104.9
(22) Date of filing: 02.10.2023
(51) Int. Cl.: F16H 59/10, F16H 63/50, B60K 20/02

(54) **ELECTRIC WORK VEHICLE**
ELEKTRISCHES ARBEITSFAHRZEUG
VÉHICULE DE TRAVAIL ÉLECTRIQUE

(30) Priority: 11.11.2022 JP 2022181172
(43) Date of publication of application: 15.05.2024
(73) Proprietor: Kubota Corporation, Osaka-shi, Osaka 556-8601 (JP)
(72) Inventor: NAGATOMI, Tatsuya, Sakai-shi, Osaka, 5900908 (JP)
(74) Representative: Cabinet Beau de Loménie

(56) References cited:
- US-A1- 2005 230 158
- US-A1- 2015 266 376
- US-A1- 2017 158 044
- US-A1- 2020 101 972
- US-A1- 2020 348 714

## Description

### Field of the Invention

The present invention relates to an electric work vehicle.

### Description of the Related Art

In such a conventional work vehicle disclosed in Japanese Patent Publication JP2019-060426A as an example, an operator changes a shift level of a transmission while operating an operation tool as a means of varying a speed of a motive power inputted from an engine. In the conventional work vehicles, the operator can change not only the shift level but also a direction of travel to either a front direction or a reverse direction by operating the operation tool. In recent years, an electric motor has been increasingly employed in the work vehicle as a driving source instead of an engine. The electric motor is able to rotate in both a forward direction and a reverse direction. On the other hand, the conventional operation tool is merely configured to operate the transmission. That is, in a case that the conventional operation tool is employed in a work vehicle driven by the electric motor, an additional operation tool is necessary for changing the direction of a rotation of the electric motor. The present invention provides an electric work vehicle which simplifies an operation for changing the direction of the rotation of the electric motor. Document US2020/101972 discloses an electric vehicle comprising:
a rotationally drivable electric motor;
a travel device configured to travel on a ground based on a drive of the electric motor;
a transmission configured to transmit a motive power from the electric motor to the travel device while having a speed of a rotation inputted from the electric motor;
a single operation part configured to accept a manual operation for changing a direction of the rotation for the electric motor and for changing a shift level of the transmission;
and a controller configured to output a control signal to the electric motor and the transmission based on the manual operation accepted by the single operation part,
wherein the single operation part includes a single lever movable in front-back direction, and the controller is configured to change the direction of rotation of the electric motor and to change the shift lever of the transmission in response to the single lever operated in a front-back direction.

### SUMMARY OF THE INVENTION

An electric work vehicle including:
a rotationally drivable electric motor (2m);
a travel device (11, 12) configured to travel on a ground based on a drive of the electric motor (2m);
a transmission (24) configured to transmit a motive power from the electric motor (2m) to the travel device (11, 12) while varying a speed of a rotation inputted from the electric motor (2m);
a single operation part (31) configured to accept a manual operation for changing a direction of the rotation of the electric motor (2m) and for changing a shift level of the transmission (24); and
a controller (40) configured to output a control signal to the electric motor (2m) and the transmission (24) based on the manual operation accepted by the single operation part (31).

According to this configuration, an operator can change not only the shift level of the transmission but also the direction of the rotation of the electric motor by operating the single operation part. That is, the operator can switch a travel direction of the electric work vehicle between a forward travel and a reverse travel without an additional operation tool for changing the direction of the rotation of the electric motor. Therefore, an operation for changing the direction of the rotation of the electric motor is simplified in the electric work vehicle.

In the electric work vehicle of the present invention,
the single operation part (31) includes a single lever (32) movable in front, back, left and right directions, and
the controller (40) is configured to change the direction of the rotation of the electric motor (2m) in response to the single lever (32) operated in a left-right direction and to change the shift level of the transmission (24) in response to the single lever (32) operated in a front-back direction.

According to this configuration, the operator can change the shift level by operating the lever in the front-back direction and can switch the travel direction of the electric work vehicle between the forward travel and the reverse travel by operating the lever in the left-right direction. This enables the operator to operate the lever intuitively.

In the electric work vehicle of the present invention,
the single operation part (31) includes:
   a first hole (33F, 51F, 52F, 53F) configured to guide the single lever (32) in the front-back direction during the manual operation of the single lever (32); and
   a second hole (33M, 51M, 52R, 53M) configured to guide the single lever (32) in the left-right direction during the manual operation of the single lever (32), and
the first hole (33F, 51F, 52F, 53F) and the second hole (33M, 51M, 52R, 53M) intersect with each other.

According to this configuration, the lever moves along the first hole when the operator operates the lever in the front-back direction. In addition, the lever moves along the second hole when the operator operates the lever in the left-right direction. This enables the operator to operate the lever in respective front, back, left and right directions certainly. That is, this configuration can avoid a risk of unintentional switching between the forward travel and the reverse travel and a risk of unintentional change of the shift level, which would otherwise be caused by slipping operator's hand.

In the electric work vehicle of the present invention,
the first hole (33F, 51F, 52F, 53F) and the second hole (33M, 51M, 52R, 53M) intersect with each other at a neutral position (33e, 51e, 52e) of the single lever (32), and
the controller (40) is configured to:
   transmit no motive power to the travel device (11, 12) in a case of the single lever (32) positioned at the neutral position (33e, 51e, 52e, 53e);
   control the electric motor (2m) to rotate in the direction which moves the travel device (11, 12) forward in a case of the single lever (32) operated forward or backward along the first hole (33F, 51F, 52F, 53F) from the neutral position (33e, 51e, 52e); and
   control the electric motor (2m) to rotate in the direction which moves the travel device (11, 12) backward in a case of the single lever (32) operated leftward or rightward not along the first hole (33F, 51F, 52F, 53F) from the neutral position (33e, 51e, 52e).

This configuration enables the operator to cause the electric work vehicle traveling forward by operating the lever forward or backward from the neutral position and to cause the electric work vehicle traveling backward by operating the lever leftward or rightward from the neutral position. The electric work vehicle stops in a case of the lever positioned at the neutral position. That is, the operator can cause the electric work vehicle traveling forward or backward by operating the lever forward, backward, leftward and rightward from the neutral position as a start point.

In one embodiment of the electric work vehicle of the present invention,
the single operation part (31) is provided with a biasing mechanism which biases the single lever (32) to the neutral position (33e, 51e, 52e, 53e).

According to this configuration, the lever is returned to the neutral position by the biasing mechanism when the operator is putting the lever back to the neutral position. Therefore, in comparison with a configuration without the biasing mechanism, the operator does not need to adjust a position of the lever when the operator is putting the lever back to the neutral position, thus relieving a burden of the operator.

In one embodiment of the electric work vehicle of the present invention,
the second hole (33M, 51M, 52R, 53M) intersects with a longitudinal intermediate portion of the first hole (33F, 51F, 52F, 53F) in the front-back direction.

This configuration switches the travel direction of the electric work vehicle from the forward travel to the reverse travel when the operator operates the lever leftward or rightward from the longitudinal intermediate portion of the first hole. This enables the operator to operate the lever intuitively.

In one embodiment of the electric work vehicle of the present invention,
the second hole (33M, 51M, 52R, 53M) intersects with the first hole (33F, 51F, 52F, 53F) with a first end portion thereof.

This configuration allows the lever to move, along the second hole, to only one side, the left side or the right side, of the of the first hole. This switches the travel direction of the electric work vehicle from the forward travel to the reverse travel when the operator operates the lever leftward or rightward along the second hole from the first hole. This enables the operator to operate the lever intuitively.

In one embodiment of the electric work vehicle of the present invention,
the single operation part (31) includes a third hole (33R) which intersects with a second end portion of the second hole (33M, 51M, 52R, 53M), and configured to guide the single lever (32) in the front-back direction during the manual operation of the single lever (32), the second end portion being an opposite end of the first end portion.

According to this configuration, the lever is guided to the third hole when the operator operates the lever leftward or rightward from the first hole. Furthermore, the shift level in a case of the work vehicle traveling backward is changed when the operator operates the lever in the front-back direction along the third hole. That is, first, the travel direction of the electric work vehicle is switched from the forward travel to the reverse travel when the operator operates the lever in the left-right direction along the second hole, and then, the shift level is changed when the operator operates the lever in the front-back direction. This enables the operator to operate the lever intuitively.

The above and other elements, features, steps, characteristics and advantages of the present invention will become more apparent from the following detailed description of the embodiments with reference to the attached drawings.

### BRIEF DESCRIPTION OF THE DRAWINGS

Embodiments of the invention will now be described with reference to the accompanying drawings in which:
FIG. 1 is a side view of a utility vehicle;
FIG. 2 is a plan view of the utility vehicle;

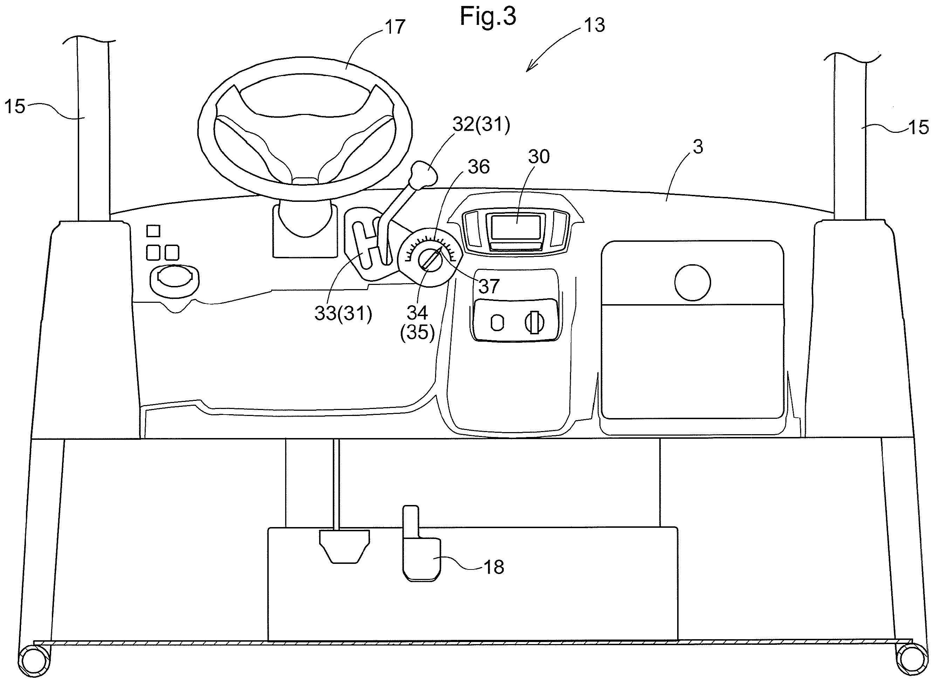

FIG. 3 is a schematic diagram of an operation panel and therearound in a driver's section;
FIG. 4 is a block diagram indicative of a configuration of a control of an electric work vehicle;
FIG. 5 is a diagram indicative of a shift gate guiding a shift lever in a shift operation tool;
FIG. 6 is a diagram indicative of the shift gate guiding the shift lever in the shift operation tool;
FIG. 7 is a diagram indicative of the shift gate guiding the shift lever in the shift operation tool; and
FIG. 8 is a diagram indicative of the shift gate guiding the shift lever in the shift operation tool.

### DETAILED DESCRIPTION OF THE EMBODIMENTS

Throughout embodiments, unless otherwise noted, "front" is defined as a front side corresponding to a front-back direction (traveling direction) relative to a body of the electric work vehicle, "back" is defined as a back side corresponding to the front-back direction relative to the body of the electric work vehicle, a left-right direction or a lateral direction is defined as a traversing direction (width direction) perpendicular to the front-back direction relative to the body of the electric work vehicle, "top" and "bottom" refer to positional relationship based on a ground height in a vertical direction relative to the body of the electric work vehicle.

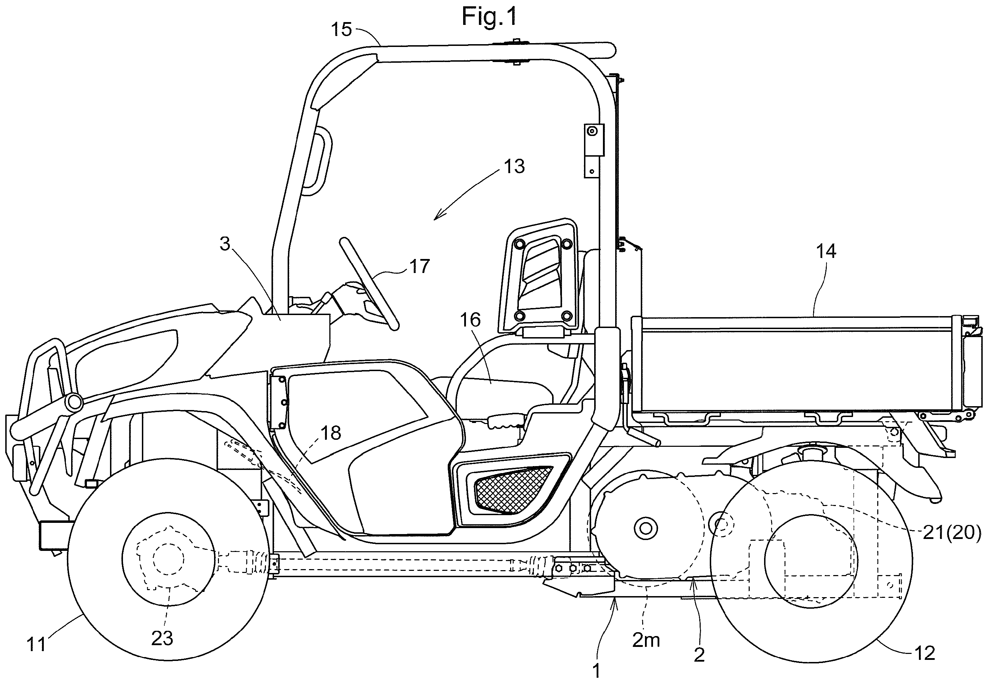

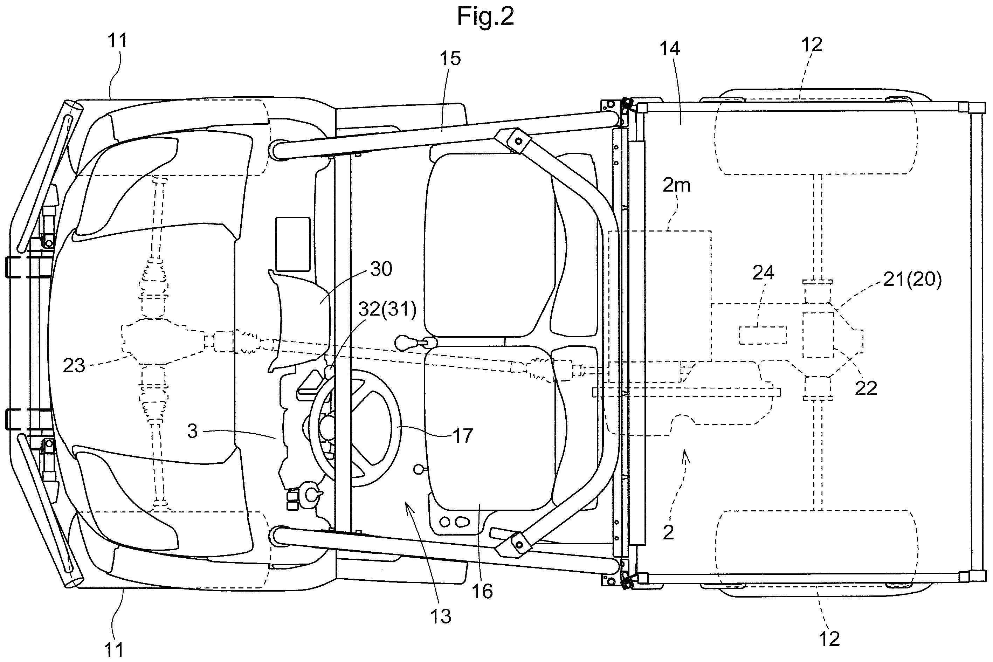

Modes for carrying out the present invention will be described with reference to the drawings showing a utility vehicle as an example of an electric work vehicle. An example of the utility vehicle shown in FIGs. 1 and 2 is utilizable for such multiple purposes as luggage-carrying, recreation, and the like. The electric work vehicle of the present invention includes an all-terrain vehicle (ATV), buggy, off-road vehicle, agricultural work vehicle, construction work vehicle, and the like.

The illustrated utility vehicle includes a pair of left and right drivable and steerable front wheels 11 and a pair of left and right drivable rear wheels 12. A travel body 1 is able to travel by the pair of front wheels 11 and the pair of rear wheels 12. The travel body 1 includes a driver's section 13 in a center portion thereof which driver's section 13 an operator boards to perform an operation. The travel body 1 includes a loading platform 14 in a rear portion thereof on which luggage is loadable. The travel body 1 is mounted with a motive power unit 2 located in an area below the loading platform 14. The motive power unit 2 includes a rotationally drivable electric motor 2m as a chief element.

The travel body 1 is mounted with a powertrain device 20. The powertrain device 20 transmits a motive power inputted from the motive power unit 2 to the pair of front wheels 11 and the pair of rear wheels 12. In this way, the pair of front wheels 11 and the pair of rear wheels 12 move on a ground based on a rotational drive of the electric motor 2m. The pair of front wheels 11 and the pair of rear wheels 12 correspond to a "travel device" recited in the claims.

The driver's section 13 is surrounded and protected by a ROPs frame 15 in a boxed shape. The driver's section 13 includes a driver's seat 16 on which an operator sits. In front of the driver's seat 16, the driver's section 13 includes a front panel 3 in which various operation tools and display devices are assembled, and a steering handle 17 for steering the pair of front wheels 11. The driver's section 13 includes an acceleration pedal 18 in a floor area thereof below the steering handle 17.

The powertrain device 20 to which the motive power from the motive power unit 2 is input includes a gear transmission mechanism 21, a rear wheel differential mechanism 22, a front wheel differential mechanism 23, and the like. The gear transmission mechanism 21 in this embodiment includes a transmission 24. The transmission 24 is configured to switch a shift level between a high-speed stage and a low-speed stage by a high-low shift clutch. That is, the transmission 24 is configured to transmit the motive power from the electric motor 2m to the pair of front wheels 11 and the pair of rear wheels 12 (i.e., the travel device) while varying the speed of the rotation inputted from the electric motor 2m.

To the front panel 3, there are assembled: a meter panel 30 which has a liquid-crystal display (LCD) and light-emitting diode (LED) lamp; a single shift operation part 31; a speed limit operation tool 34; and the like. The shift operation part 31 accepts a manual operation for changing the shift level of the transmission 24. The shift operation part 31 includes a single shift lever 32, a shift gate 33. The shift operation part 31 is provided with a biasing mechanism 32a. Alternatively, the shift operation part 31 may include the biasing mechanism 32a. The shift gate 33 is formed in a H-shape in the front panel 3. The shift lever 32 is movable along the shift gate 33 with the H-shape. The shift lever 32 is operable in front, back, left and right directions. The biasing mechanism 32a biases the shift lever 32 to a neutral position described later. The biasing mechanism 32a may be a plate spring, a coil spring, a torsion spring or a rubber. The biasing mechanism 32a may also be a composite containing at least one of the spring and the rubber. The shift operation part 31 corresponds to a "single operation tool" recited in claims. The shift lever 32 corresponds to a "single lever" recited in claims.

The speed limit operation tool 34 sets an upper limit of a vehicle speed. The speed limit operation tool 34 is a circular dial tool. An arc-shaped upper speed limit indicator 36 is provided around the speed limit operation tool 34. The upper speed limit indicator 36 has an arc-shaped scale indicative of the vehicle speed. The upper speed limit indicator 36 is provided with a pointer 37 which is disposed below the arc-shaped scale and mechanically linked to the speed limit operation tool 34.

### CONFIGURATION RELATED TO MOTOR CONTROL

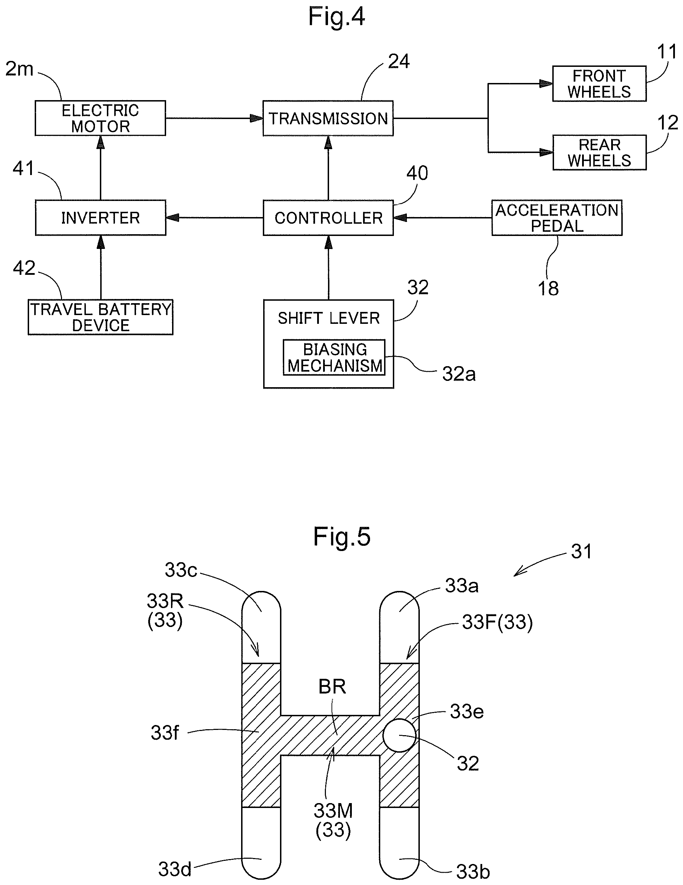

As shown in FIG. 4, a control configuration for the electric motor 2m is provided with a controller 40 and an inverter 41. The controller 40 is a chief element of the electric work vehicle and is composed of a collection of multiple electronic control units (ECUs). The controller 40 is configured to control the drive of the electric motor 2m and the shift level of the transmission 24. The controller 40 connects with the shift lever 32 and the acceleration pedal 18.

A travel battery device 42 is, for example, a lithium-ion battery. Not shown in diagrams, the travel battery device 42 is composed of a plurality of small low-voltage unit batteries (cells) stacked together. The travel battery device 42 outputs a voltage of, for example, 250 volts. The unit batteries (cells) are housed in a sealed storage case of the travel battery device 42.

The controller 40 connects with the inverter 41 via a harness (not shown) for signals. The controller 40 outputs a control signal to the inverter 41 in response to an operation of the acceleration pedal 18. In response to the control signal by the controller 40, the inverter 41 adjusts an electric power (voltage, frequency and current) to be supplied to the electric motor 2m from the travel battery device 42 and controls an output of the electric motor 2m.

The controller 40 connects with the transmission 24 via a harness (not shown) for signals. The controller 40 outputs a control signal to the transmission 24 in response to an operation of the shift lever 32. The transmission 24 sets the shift level to either the high-speed stage or the low-speed stage in response to the control signal by the controller 40.

In this embodiment, the shift lever 32 functions as a forward/reverse switching lever which switches a travel direction of the electric work vehicle between a forward travel and a reverse travel. The shift gate 33 has a forward operation hole 33F for a forward operation, a reverse operation hole 33R for a reverse operation, and an intermediate hole 33M. The forward operation hole 33F and the reverse operation hole 33R are arranged side by side, and configured to guide the shift lever 32 in the front-back direction during the operation of the shift lever 32. The intermediate hole 33M is located between the forward operation hole 33F and the reverse operation hole 33R, and communicates with each of the forward operation hole 33F and the reverse operation hole 33R.

That is, the intermediate hole 33M intersects with each of the forward operation hole 33F and the reverse operation hole 33R. The intermediate hole 33M is configured to guide the shift lever 32 in the left-right direction during the operation of the shift lever 32. A right end portion (first end portion) of the intermediate hole 33M connects with the forward operation hole 33F. The reverse operation hole 33R intersects with a left end portion (second end portion), which is an opposite end portion of the right end portion, of the intermediate hole 33M and is configured to guide the shift lever 32 in the front-back direction during the operation of the shift lever 32. The forward operation hole 33F corresponds to a "first hole" recited in claims. The intermediate hole 33M corresponds to a "second hole" recited in claims. The reverse operation hole 33R corresponds to a "third hole" recited in claims.

The both ends of the forward operation hole 33F are respectively defined as a low-speed forward travel position 33a and a high-speed forward travel position 33b. The both ends of the reverse operation hole 33R are respectively defined as a low-speed reverse travel position 33c and a high-speed reverse travel position 33d. A middle position between the low-speed forward travel position 33a and the high-speed forward travel position 33b is a neutral position 33e. A middle position between the low-speed reverse travel position 33c and the high-speed reverse travel position 33d is a neutral position 33f. Both neutral positions 33e, 33f are connected by the intermediate hole 33M. In other words, the intermediate hole 33M intersects with the longitudinal intermediate portion of the forward operation hole 33F and the longitudinal intermediate portion of the reverse operation hole 33R.

In this embodiment, as shown in FIG. 4 the shift operation part 31 is provided with the biasing mechanism 32a. Alternatively, the shift operation part 31 may include the biasing mechanism 32a. FIGs. 5 to 8 shows a hatched line indicative of a biasing range BR in which an elasticity of the biasing mechanism 32a affects on the shift lever 32. The area of the biasing range BR spans an area of the intermediate hole 33M and longitudinal intermediate areas of both the forward operation hole 33F and the reverse operation hole 33R. In a case that the operator does not operate the shift lever 32 and that the shift lever 32 is positioned within the biasing range BR, the shift lever 32 is returned to the neutral position 33e by the elasticity of the biasing mechanism 32a. In other words, the position at which the forward operation hole 33F and the intermediate hole 33M intersect with each other is the neutral position 33e of the shift lever 32. When the operator operates the shift lever 32 from the neutral position 33e, the operation is against the elasticity of the biasing mechanism 32a, to the low-speed forward travel position 33a, the high-speed forward travel position 33b, the low-speed reverse travel position 33c, or the high-speed reverse travel position 33d.

In a case of the shift lever 32 positioned at the neutral position 33e or the neutral position 33f, the controller 40 prevents the electric motor 2m from driving even when the acceleration pedal 18 is operated. In this case, the inverter 41 supplies no electric power to the electric motor 2m. That is, the controller 40 is configured to transmit no motive power to the pair of front wheels 11 and the pair of rear wheels 12 (i.e., the travel device) in a case of the shift lever 32 positioned at the neutral positions 33e, 33f.

In a case of the shift lever 32 positioned at the low-speed forward travel position 33a or the high-speed forward travel position 33b, the controller 40 outputs to the inverter 41 the control signal for a forward rotation of the electric motor 2m, in response to the operation of the acceleration pedal 18. The inverter 41 controls the electric motor 2m to rotate the electric motor 2m in a forward direction in response to the control signal by the controller 40. That is, the controller 40 is configured to control the electric motor 2m to rotate in the direction which makes the pair of front wheels 11 and the pair of rear wheels 12 (i.e., the travel device) travel forward in a case of the shift lever 32 operated forward or backward along the forward operation hole 33F from the neutral position 33e. The controller 40 controls the electric motor 2m to rotate in the direction which makes the travel device travel forward in response to the operation of the acceleration pedal 18. Instead of the acceleration pedal 18, a tool for adjusting the speed of the rotation of the electric motor 2m may be employed on the electric work vehicle.

In a case of the shift lever 32 positioned at the low-speed reverse travel position 33c or the high-speed reverse travel position 33d, the controller 40 outputs to the inverter 41 the control signal for a reverse rotation of the electric motor 2m, in response to the operation of the acceleration pedal 18. The inverter 41 controls the electric motor 2m to rotate the electric motor 2m in a reverse direction in response to the control signal by the controller 40. Putting this configuration in other words, the controller 40 is configured to control the electric motor 2m to rotate in the direction which makes the pair of front wheels 11 and the pair of rear wheels 12 (i.e., the travel device) travel backward in a case of the shift lever 32 operated leftward along the intermediate hole 33M (not along the forward operation hole 33F) from the neutral position 33e. The controller 40 control the electric motor 2m to rotate in the direction which makes the travel device travel backward in response to the operation of the acceleration pedal 18.

That is, the controller 40 is configured to change the direction of the rotation of the electric motor 2m in response to the shift lever 32 operated in the left-right direction and to change the shift level of the transmission 24 in response to the shift lever 32 operated in the front-back direction. With this configuration in this embodiment, the powertrain device 20 does not have to include a reverse mechanism for switching the travel direction between the forward travel and the reverse travel. In other words, switching of the direction of the rotation of the electric motor 2m realizes switching between the forward travel and the reverse travel. In this way, the shift lever 32 is configured to accept the manual operation for changing the direction of the rotation of the electric motor 2m and for changing the shift level of the transmission 24. The controller 40 is configured to output the control signal to the electric motor 2m and the transmission 24 based on the manual operation accepted by the shift lever 32.

With the above-described configuration in this embodiment, it is possible to switch the direction of the rotation of the electric motor 2m and to change the shift level of the transmission 24 by the single shift operation part 31, i.e., by the single shift lever 32.

### Other Embodiments

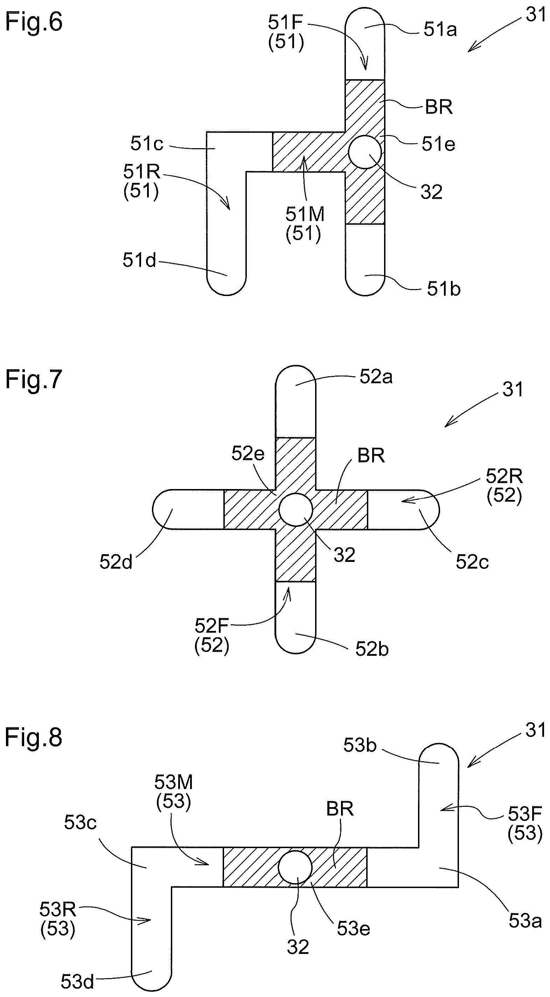

The present invention is not limited to the configuration illustrated in the above embodiment. Other representative embodiments of the invention will be described below.
(1) The reverse operation hole 33R shown in FIG.5 is positioned on the left side of the forward operation hole 33F. Alternatively, the reverse operation hole 33R may be positioned on the right side of the forward operation hole 33F. That is, the controller 40 may be configured to control the electric motor 2m to rotate in the direction which makes the pair of front wheels 11 and the pair of rear wheels 12 (i.e., the travel device) travel backward in a case of the shift lever 32 operated on the left or right side of the neutral position 33e (not along the forward operation hole 33F).
(2) The electric work vehicle may include a shift gate 51 shown in FIG. 6 instead of the shift gate 33 shown in FIG. 5. In FIG. 6 as an example, a forward operation hole 51F (first hole) and a reverse operation hole 51R (third hole) each extend in the front-back direction. Front and back end portions of the forward operation hole 51F are respectively defined as a low-speed forward travel position 51a and a high-speed forward travel position 51b. Front and back end portions of the reverse operation hole 51R are respectively defined as a low-speed reverse travel position 51c and a high-speed reverse travel position 51d. The low-speed reverse travel position 51c is positioned in an upside of the high-speed reverse travel position 51d from the paper perspective in FIG.6. A middle position between the low-speed forward travel position 51a and the high-speed forward travel position 51b is a neutral position 51e. An intermediate hole 51M (second hole) is located between the neutral position 51e and the low-speed reverse travel position 51c, and communicates with each of the forward operation hole 51F and the reverse operation hole 51R. Predetermined upper and lower areas relative to the neutral position 51e in the forward operation hole 51F and a predetermined area to left of the neutral position 51e in the intermediate hole 51M form a biasing range BR of the biasing mechanism 32a. Although the reverse operation hole 51R is positioned on a left side of the forward operation hole 51F, the reverse operation hole 51R may be positioned on a right side of the forward operation hole 51F.
(3) The electric work vehicle may include a shift gate 52 shown in FIG. 7 instead of the shift gate 33 shown in FIG. 5. In FIG. 7 as an example, a forward operation hole 52F (first hole) extends in the front-back direction and a reverse operation hole 52R (second hole) extends in the left-right direction. The forward operation hole 52F and the reverse operation hole 52R intersect with each other in a cross shape. Front and back end portions of the forward operation hole 52F are respectively defined as a low-speed forward travel position 52a and a high-speed forward travel position 52b. Left and right end portions of the reverse operation hole 51R are respectively defined as a low-speed reverse travel position 52c and a high-speed reverse travel position 52d. A middle position between the low-speed forward travel position 52a and the high-speed forward travel position 52b and between the low-speed reverse travel position 52c and the high-speed reverse travel position 52d is a position where the forward operation hole 52F and the reverse operation hole 52R intersects with each other in the cross shape, i.e., a neutral position 52e. Predetermined upper and lower areas relative to the neutral position 52e in the forward operation hole 52F and predetermined left and right areas relative to the neutral position 52e in the reverse operation hole 52R form a biasing range BR of the biasing mechanism 32a.
(4) The electric work vehicle may include a shift gate 53 shown in FIG. 8 instead of the shift gate 33 shown in FIG. 5. In FIG. 8 as an example, a forward operation hole 53F (first hole) and a reverse operation hole 53R (third hole) each extend in the front-back direction. Back and front end portions of the forward operation hole 53F are respectively defined as a low-speed forward travel position 53a and a high-speed forward travel position 53b. The low-speed forward travel position 53a is positioned on a downside of the high-speed forward travel position 53b from the paper perspective in FIG.8. Front and back end portions of the reverse operation hole 53R are respectively defined as a low-speed reverse travel position 53c and a high-speed reverse travel position 53d. The low-speed reverse travel position 53c is positioned on an upside of the high-speed reverse travel position 53d from the paper perspective in FIG.8. An intermediate hole 53M (second hole), extending in the left-right direction, is located between the low-speed forward travel position 53a and the low-speed reverse travel position 53c, and communicates with each of the forward operation hole 53F and the reverse operation hole 53R. A neutral position 53e is located at an intermediate area of the intermediate hole 53M in the left-right direction. Predetermined left and right areas relative to the neutral position 53e in the intermediate hole 53M form a biasing range BR of the biasing mechanism 32a. Although the reverse operation hole 53R is positioned on a left side of the forward operation hole 53F, the reverse operation hole 53R may be positioned on a right side of the forward operation hole 53F.

Note that the configuration disclosed in the above embodiments (including other embodiments; the same applies to the following) may be combined with configurations disclosed in other embodiments, as long as no contradiction arises. The embodiments disclosed herein are illustrative. Embodiments of the present invention are not limited thereto, and can be altered without departing from the claims.

## Claims

1. An electric work vehicle comprising:
a rotationally drivable electric motor (2m);
a travel device (11, 12) configured to travel on a ground based on a drive of the electric motor (2m);
a transmission (24) configured to transmit a motive power from the electric motor (2m) to the travel device (11, 12) while varying a speed of a rotation inputted from the electric motor (2m);
a single operation part (31) configured to accept a manual operation for changing a direction of the rotation of the electric motor (2m) and for changing a shift level of the transmission (24); and
a controller (40) configured to output a control signal to the electric motor (2m) and the transmission (24) based on the manual operation accepted by the single operation part (31), wherein
the single operation part (31) includes a single lever (32) movable in front, back, left and right directions, and
the controller (40) is configured to change the direction of the rotation of the electric motor (2m) in response to the single lever (32) operated in a left-right direction and to change the shift level of the transmission (24) in response to the single lever (32) operated in a front-back direction
the single operation part (31) includes:
a first hole (33F, 51F, 52F, 53F) configured to guide the single lever (32) in the front-back direction during the manual operation of the single lever (32); and
a second hole (33M, 51M, 52R, 53M) configured to guide the single lever (32) in the left-right direction during the manual operation of the single lever (32), and
the first hole (33F, 51F, 52F, 53F) and the second hole (33M, 51M, 52R, 53M) intersect with each other,
wherein
the first hole (33F, 51F, 52F, 53F) and the second hole (33M, 51M, 52R, 53M) intersect with each other at a neutral position (33e, 51e, 52e) of the single lever (32), and
the controller (40) is configured to:
transmit no motive power to the travel device (11, 12) in a case of the single lever (32) positioned at the neutral position (33e, 51e, 52e, 53e);
control the electric motor (2m) to rotate in the direction which moves the travel device (11, 12) forward in a case of the single lever (32) operated forward or backward along the first hole (33F, 51F, 52F, 53F) from the neutral position (33e, 51e, 52e); and
control the electric motor (2m) to rotate in the direction which moves the travel device (11, 12) backward in a case of the single lever (32) operated leftward or rightward not along the first hole (33F, 51F, 52F, 53F) from the neutral position (33e, 51e, 52e).

2. The electric work vehicle according to claim 1, wherein
the single operation part (31) is provided with a biasing mechanism which biases the single lever (32) to the neutral position (33e, 51e, 52e, 53e).

3. The electric work vehicle according to claim 1, wherein
the second hole (33M, 51M, 52R, 53M) intersects with a longitudinal intermediate portion of the first hole (33F, 51F, 52F, 53F) in the front-back direction.

4. The electric work vehicle according to claim 1, wherein
the second hole (33M, 51M, 52R, 53M) intersects with the first hole (33F, 51F, 52F, 53F) with a first end portion thereof.

5. The electric work vehicle according to claim 4, wherein
the single operation part (31) includes a third hole (33R) which intersects with a second end portion of the second hole (33M, 51M, 52R, 53M), and configured to guide the single lever (32) in the front-back direction during the manual operation of the single lever (32), the second end portion being an opposite end of the first end portion.

## Patentansprüche

1. Elektrisches Arbeitsfahrzeug, umfassend:
ein drehbar antreibbarer elektrischer Motor (2m);
eine Fahrvorrichtung (11, 12), die konfiguriert ist, um sich basierend auf einem Antrieb des elektrischen Motors (2m) auf einem Boden fortzubewegen;
ein Getriebe (24), das konfiguriert ist, um eine Antriebskraft vom elektrischen Motor (2m) an die Fahrvorrichtung (11, 12) zu übertragen, während eine Drehzahl variiert wird, die vom elektrischen Motor (2m) eingegeben wird;
ein einzelnes Bedienungselement (31), das konfiguriert ist, um einen manuellen Betrieb zur Änderung der Drehrichtung des elektrischen Motors (2m) und zur Änderung einer Schaltstufe des Getriebes (24) zuzulassen; und
eine Steuereinheit (40), die konfiguriert ist, um ein Steuersignal an den elektrischen Motor (2m) und das Getriebe auszugeben, basierend auf der manuellen Betätigung, die vom einzelnen Bedienungselement (31) zugelassen wurde, wobei
das einzelne Bedienelement (31) einen einzelnen Hebel (32) beinhaltet, der beweglich in einer Vor-, Zurück-, Links- und Rechtsrichtung bewegt werden kann, und
die Steuereinheit (40) die konfiguriert ist, um die Drehrichtung des elektrischen Motors (2m) in Reaktion darauf zu ändern, dass der einzelne Hebel (32) in einer Links-Rechts-Richtung bedient wird, und die Schaltstufe des Getriebes (24) in Reaktion darauf zu ändern, dass der einzelne Hebel (32) in einer Vor-Zurück-Bewegung bedient wird,
wobei das einzelne Bedienelement (31) Folgendes beinhaltet:
eine erste Bohrung (33F, 51F, 52F, 53F), die konfiguriert ist, um den einzelnen Hebel (32) in der Vor-Zurück-Richtung während der manuellen Betätigung des einzelnen Hebels (32) zu führen; und
eine zweite Bohrung (33M, 51M, 52R, 53M), die konfiguriert ist, um den einzelnen Hebel (32) in der Links-Rechts-Richtung während der manuellen Betätigung des einzelnen Hebels (32) zu führen,
und wobei sich die erste Bohrung (33F, 51F, 52F, 53F) und die zweite Bohrung (33M, 51M, 52R, 53M) schneiden,
wobei sich die erste Bohrung (33F, 51F, 52F, 53F) und die zweite Bohrung (33M, 51M, 52R, 53M) an einer neutralen Position (33e, 51e, 52e) des Einzelnen Hebels (32) schneiden und die Steuereinheit (40) konfiguriert ist, um:
keine Antriebskraft an die Fahrvorrichtung (11, 12) für den Fall zu übertragen, dass der einzelne Hebel (32) in der neutralen Position (33e, 51e, 52e, 53e) positioniert ist;
den elektrischen Motor (2m) so zu steuern, dass er sich in die Richtung dreht, die die Fahrvorrichtung (11, 12) vorwärts bewegt, in einem Fall, in dem der einzelne Hebel (32) aus der neutralen Position (33e, 51e, 52e) entlang der ersten Bohrung (33F, 51F, 52F, 53F) vor oder zurück betätigt wird; und
den elektrischen Motor (2m) so zu steuern, dass er sich in die Richtung dreht, die die Fahrvorrichtung (11, 12) rückwärts bewegt, in einem Fall, in dem der einzelne Hebel (32) aus der neutralen Position (33e, 51e, 52e) entlang der ersten Bohrung (33F, 51F, 52F, 53F) nach links oder rechts betätigt wird.

2. Elektrisches Arbeitsfahrzeug nach Anspruch 1, wobei
das einzelne Bedienelement (31) mit einem Vorspannmechanismus versehen ist, der den einzelnen Hebel (32) in die neutrale Position (33e, 51e, 52e, 53e) vorspannt.

3. Elektrisches Arbeitsfahrzeug nach Anspruch 1, wobei
sich die zweite Bohrung (33M, 51M, 52R, 53M) in der Vor-Zurück-Richtung mit einem längs gerichteten Mittelabschnitt der ersten Bohrung (33F, 51F, 52F, 53F) schneidet.

4. Elektrisches Arbeitsfahrzeug nach Anspruch 1, wobei
sich die zweite Bohrung (33M, 51M, 52R, 53M) mit der ersten Bohrung (33F, 51F, 52F, 53F) mit einem ersten Endabschnitt davon schneidet.

5. Elektrisches Arbeitsfahrzeug nach Anspruch 4, wobei
das einzelne Bedienelement (31) eine dritte Bohrung (33R) beinhaltet, die sich mit einem zweiten Endabschnitt der zweiten Bohrung (33M, 51M, 52R, 53M) schneidet und konfiguriert ist, um den einzelnen Hebel (32) während der manuellen Betätigung des einzelnen Hebels (32) in der Vor-Zurück-Richtung zu führen, wobei der zweite Endabschnitt ein gegenüberliegendes Ende des ersten Endabschnitts ist.

## Revendications

1. Véhicule de travail électrique comprenant :
un moteur électrique qui peut être entraîné en rotation (2m) ;
un dispositif de déplacement (11, 12) configuré pour se déplacer sur un sol sur la base d'un entraînement du moteur électrique (2m) ;
une transmission (24) configurée pour transmettre une puissance motrice du moteur électrique (2m) au dispositif de déplacement (11, 12) tout en faisant varier une vitesse d'une rotation transmise par le moteur électrique (2m) ;
une partie opérationnelle unique (31) configurée pour accepter une opération manuelle destinée à changer un sens de rotation du moteur électrique (2m) et à changer un rapport de la transmission (24) ; et
un dispositif de commande (40) configuré pour délivrer un signal de commande au moteur électrique (2m) et à la transmission (24) sur la base de l'opération manuelle acceptée par la partie opérationnelle unique (31),
dans lequel
la partie opérationnelle unique (31) comporte un seul levier (32) qui peut être déplacé vers l'avant, vers l'arrière, vers la gauche et vers la droite, et
le dispositif de commande (40) est configuré pour changer le sens de rotation du moteur électrique (2m) en réponse au levier unique (32) actionné dans le sens gauche-droite et pour changer le rapport de la transmission (24) en réponse au levier unique (32) actionné dans le sens avant-arrière,
la partie opérationnelle unique (31) comprenant :
un premier orifice (33F, 51F, 52F, 53F) configuré pour guider l'unique levier (32) dans le sens avant-arrière pendant le fonctionnement manuel du levier unique (32) ; et
un deuxième orifice (33M, 51M, 52R, 53M) configuré pour guider l'unique levier (32) dans le sens gauche-droite pendant le fonctionnement manuel de l'unique levier (32), et
le premier orifice (33F, 51F, 52F, 53F) et le deuxième orifice (33M, 51M, 52R, 53M) se croisent,
dans lequel
le premier orifice (33F, 51F, 52F, 53F) et le deuxième orifice (33M, 51M, 52R, 53M) se croisent au niveau d'une position neutre (33e, 51e, 52e) du levier unique (32), et
le dispositif de commande (40) est configuré pour :
ne transmettre aucune puissance motrice au dispositif de déplacement (11, 12) lorsque le levier unique (32) est en position neutre (33e, 51e, 52e, 53e) ;
commander le moteur électrique (2m) afin qu'il tourne dans le sens qui déplace le dispositif de déplacement (11, 12) en marche avant lorsque le levier unique (32) est actionné vers l'avant ou vers l'arrière le long du premier orifice (33F, 51F, 52F, 53F) à partir de la position neutre (33e, 51e, 52e) ; et
commander le moteur électrique (2m) afin qu'il tourne dans le sens qui déplace le dispositif de déplacement (11, 12) en marche arrière lorsque le seul levier (32) est actionné vers la gauche ou vers la droite mais pas le long du premier orifice (33F, 51F, 52F, 53F) à partir de la position neutre (33e, 51e, 52e).

2. Véhicule de travail électrique selon la revendication 1, dans lequel
la partie opérationnelle unique (31) est équipée d'un mécanisme de sollicitation qui place le levier unique (32) dans la position neutre (33e, 51e, 52e, 53e).

3. Véhicule de travail électrique selon la revendication 1, dans lequel
le deuxième orifice (33M, 51M, 52R, 53M) croise une partie intermédiaire longitudinale du premier orifice (33F, 51F, 52F, 53F) dans le sens avant-arrière.

4. Véhicule de travail électrique selon la revendication 1, dans lequel
le deuxième orifice (33M, 51M, 52R, 53M) croise le premier orifice (33F, 51F, 52F, 53F) avec une première partie d'extrémité de celui-ci.

5. Véhicule de travail électrique selon la revendication 4, dans lequel
la partie opérationnelle unique (31) comporte un troisième orifice (33R) qui croise une deuxième partie d'extrémité du deuxième orifice (33M, 51M, 52R, 53M), et configuré pour guider le levier unique (32) dans le sens avant-arrière pendant le fonctionnement manuel du levier unique (32), la deuxième partie d'extrémité étant une extrémité opposée de la première partie d'extrémité.
